# EUROPEAN PATENT APPLICATION

(11) **EP 4 640 345 A1**
(43) Date of publication of application: **29.10.2025**
(21) Application number: 24315216.2
(22) Date of filing: 24.04.2024
(51) Int. Cl.: B23B 29/034

(54) **BORING HEAD**

(71) Applicant: Seco Tools AB, 737 82 Fagersta (SE)
(72) Inventor: Kopp-Chtarque, Frédéric, 737 82 FAGERSTA (SE)
(74) Representative: Sandvik

(57) **Abstract**

The present invention relates to a boring head for metal cutting, which has a main axis in a diameter direction (y), and an extension in a height direction (z), which height direction (z) is perpendicular to the main axis, and comprises a support unit (3), a tool unit (4), and a locking mechanism. The support unit (3) extends axially inward along the main axis from an axially outer end, and comprises a support interface (8) at the outer end. The tool unit (4) extends axially outward along the main axis from an axially inner end, and comprises a tool interface (12) at the inner end. The tool unit (4) is releasably secured to the support unit (3) by the locking mechanisms forcing the tool interface (12) against the support interface (8). The support interface (8) comprises a pair of support guide surfaces (16), which extend in the height direction (z) and face in opposite directions. The tool interface (12) comprises a pair of tool guide surfaces (22), which extend in the height direction (z) and face in opposite directions toward a respective one of the support guide surfaces (16), wherein the tool unit (4) is movably arranged in the height direction (z) by the tool guide surfaces (22) sliding against a respective one of the support guide surfaces (16).

## Description

### Technical field

The present invention relates to a boring head for metal cutting,

### Background

A boring device typically comprises a boring head with a cutting edge, which boring head is attachable to a rotatable spindle. During operation, the boring head is inserted into a hole and rotated around the axis of the spindle. The cutting edge is brought into contact with the internal wall surface to machine the internal wall surface, in order to, for example, increase the hole diameter.

Boring heads that allow precise positioning of a cutting edge in order to control the cutting diameter with high precision are known. A known boring head comprises a carrier for receiving a cutting insert with the cutting edge, and a piston, wherein the carrier is secured to the piston. The piston is axially movable in the boring head. Thus, when the piston is operated to move axially, the cutting edge of the cutting insert is moved a corresponding axial distance. When the boring head is mounted on a rotatable spindle, the cutting diameter of the boring head can be changed by moving the piston such that the axial position of the cutting edge is changed to a desired position. There is a desire to further improve tolerances for machined diameters and surface finish of boring heads.

### Summary

It is an object of the present invention to mitigate the shortcomings of the prior art. This object is achieved according to the invention by means of a boring head according to claim 1.

An inventive boring head for metal cutting has a main axis in a diameter direction (y), and an extension in a height direction (z), which height direction (z) is perpendicular to the main axis, and comprises
- a support unit,
- a tool unit, and
- a locking mechanism,
wherein
- the support unit extends axially inward along the main axis from an axially outer end, and comprises a support interface at the outer end,
- the tool unit extends axially outward along the main axis from an axially inner end, and comprises a tool interface at the inner end,
- the tool unit is releasably secured to the support unit by the locking mechanisms forcing the tool interface against the support interface,
- the support interface comprises a pair of support guide surfaces, which extend in the height direction and face in opposite directions, and
- the tool interface comprises a pair of tool guide surfaces, which extend in the height direction (z) and face in opposite directions toward a respective one of the support guide surfaces, wherein the tool unit is movably arranged in the height direction by the tool guide surfaces sliding against a respective one of the support guide surfaces.

In contrast to a known boring head, where a carrier for holding a cutting insert is movable only together with a piston in a diameter direction, the present boring head comprises a tool unit that is movably arranged relative a support unit, optionally a piston thereof. When the tool unit is moved relative the support unit, the tool guide surfaces slide against a respective one of the support guide surfaces. Thereby, the direction of this relative movement is defined by the orientation and cooperation of the guide surfaces of the respective interface. In the proposed boring head, the tool unit is movable relative the support unit specifically in the height direction (z), wherein the height direction (z) is perpendicular to the diameter direction (y) of the main axis. Thus, the support unit both keeps the tool unit in a desired diameter position and allows for adjustment in the height direction. Thanks to being adjustable in the height direction, the position of a cutting edge of the tool unit can be set in a position offset from the diameter direction of the main axis. Thereby it is possible to compensate for deviations in the machined diameter caused by for example deflections, whereby tolerances and surface finish improves.

The present boring head is intended to be used in boring operations as an accessory for a machine tool, for example a CNC machine, i.e. a machine with computer numerical control. Therein, the boring head is configured mountable to a spindle of the machine tool, which spindle is rotatable around an axis of rotation. The boring head is suitable for chip removing machining of workpieces upon rotation around an axis of rotation. The workpieces may in particular, but not exclusively, be metallic workpieces. The boring head is suitable for enlarging preproduced holes to holes with larger diameter than the preproduced holes. The boring head is especially suitable for producing enlarged holes with high demands on tolerances in terms of geometry and dimension, and surface finish.

The boring head has a main axis in a diameter direction (y), and an extension in a height direction (z), which height direction (z) is perpendicular to the main axis. Preferably, the boring head is designed and configured to be rotatable around an axis of rotation, for example the axis of rotation of a rotatable spindle, which defines a reference direction (x) in the boring head. The height direction (z) is perpendicular to both the reference direction (x) and the diameter direction (y) of the main axis. During operation, when the boring head is mounted to the rotatable spindle, the diameter direction is the radial direction of the rotatable spindle, or in other words, the direction of the desired diameter to be machined in the preproduced hole of the workpiece. An axial direction, axially inward and axially outward is to be understood as directions along the main axis, wherein outward is toward the position of where a cutting edge is located during operation. Inward is a direction along the main axis toward a center of the boring head as seen from a cutting edge during operation.

The present boring head comprises a tool unit, which has an extension along the main axis. Optionally, the tool unit is configured to receive an element with a cutting edge, or comprises an element with a cutting edge, wherein the tool unit may form an integral one-piece component with the element. Preferably, the element with the cutting edge is an exchangeable cutting insert, for example an indexable cutting insert, which comprises several cutting edges that are presentable to an active cutting position in one respective index position each.

The present boring head comprises a support unit. The support unit extends axially inward along the main axis from an axially outer end.

The support unit comprises a support interface at the axially outer end, and the tool unit comprises a tool interface at an axially inner end. The tool unit is releasably secured to the support unit by a locking mechanism forcing the tool interface against the support interface.

According to an embodiment, the support unit comprises a piston, which extends along the main axis and is movably arranged in the boring head along the main axis, wherein the axially outer end of the support unit is the axially outer end of the piston and comprises the support interface. Optionally, the support unit constitutes a piston which is movably arranged in the boring head, for example in a housing of the boring head. In other words, the support unit extends in the diameter direction, and the support unit is preferably in form of a position which is axially movable in the diameter direction. An advantage with a support unit in form of a moveable piston is that the position of the tool unit is more easily adjustable in the diameter direction. When the piston is adjusted axially outward, a cutting edge of the tool unit is positioned to machine with an increased diameter.

The support interface comprises a pair of support guide surfaces, which extend in the height direction (z) and face in opposite directions. The tool interface comprises a pair of tool guide surfaces, which extend in the height direction (z) and face in opposite directions toward a respective one of the support guide surfaces, wherein the tool unit is movably arranged in the height direction by the tool guide surfaces sliding against a respective one of the support guide surfaces.

According to an embodiment, the support interface comprises a main contact surface, which faces axially outward. The tool interface comprises a main contact surface, which faces axially inward and contacts the main contact surface of the support interface. The contacting main contact surfaces ensure that the relative axial position of the tool unit and support unit is fixed when the tool unit is secured to the support unit. The main contact surfaces are preferably normal to the main axis and parallel to the height direction. Thereby the tool unit and the support unit, after the tool unit has been moved to a new position in the height direction, have the same relative axial position when forced together.

According to an embodiment, the pair of support guide surfaces protrude axially outward relative the main contact surface of the support interface, and the pair of tool guide surfaces are recessed axially inward relative the main contact surface of the tool interface. Thereby, cutting forces acting on the tool unit are efficiently transferred to the support unit via the guide surfaces.

Preferably, each guide surface of both pars are parallel with the main axis. Alternatively, they are arranged converging axially inward, such that a dovetail connection is formed. Preferably, each guide surface of both pairs is planar.

According to a preferred embodiment, the support interface comprises a rectangular block which protrudes axially outward from the main contact surface, wherein each support guide surface in the pair of support guide surfaces forms one respective side surface of the block. Correspondingly, the tool interface comprises a rectangular recess, wherein each tool guide surface in the pair of tool guide surfaces forms one respective side surface of the recess. The block has an axially outward facing surface between the support guide surfaces, and the recess has an axially inward facing surface between the tool guide surfaces. Preferably, there is a gap between the axially outward facing surface of the block and the axially inward facing surface of the recess to ensure that the relative axial position of the tool unit and the support unit is defined by the main contact surfaces. This design with block and recess allows an efficient way of producing the pairs of guide surfaces, for example by machining such as milling.

Preferably, the boring head comprises a height adjustment mechanism, which is operable to move the tool unit relative the support unit in the height direction. Thereby it is possible to increase precision of the adjustment. Optionally, the height adjustment mechanism is operable to move the tool unit in one way only, for example upwards, in the height direction, or in both ways, i.e. upward and downward.

According to an embodiment, the boring head comprises a height adjustment screw, which is in engagement with the support unit and the tool unit, and which, when the tool unit is released by the locking mechanism, is operable to move the tool unit in the height direction (z) relative the support unit. Preferably, as seen perpendicular to both the diameter direction and the height direction, the height adjustment screw extends at an angle α of 30° - 60° to the diameter direction. Due to the angle relative the diameter direction, the screw advances a smaller distance in the height direction when turned such that a more exact positioning is achieved.

Preferably, the height adjustment screw has front end and a rear end, and a head at the rear end. Furthermore, the height adjustment screw is in threading engagement with the tool unit and abuts against an abutment surface of the support interface with the front end. The head may be designed to cooperate with a tool for turning the screw, such as a screwdriver or Allen key, and to be directly accessible from outside the tool unit. This provides a reliable and non-complex height adjustment mechanism which is cost-efficient to produce. Alternatively, the screw is in threaded engagement with both the tool unto and the support unit, for example with a left-hand thread with one of the tool unit and the support unit, and with a right-hand thread with the other one. Optionally, the screw is differential screw.

Preferably, the tool unit, at the axially outer end thereof, comprises an insert seat for receiving a cutting insert. The axially outer end of the tool unit is the end opposite to the tool interface as seen along the main axis. Optionally, the boring head comprises a cutting insert received in the insert seat. The cutting insert is releasable secured in the insert seat by for example a screw or a clamp. When the cutting insert is secured in the insert seat, surfaces of the cutting insert abut against surfaces in the insert seat for achieving a well-defined relative position. For example, a main surface or the cutting insert rests on a bottom surface of the insert seat and one or more side surfaces of the cutting insert are in contact with side surfaces of the insert seat.

According to an embodiment, the insert seat comprises a bottom support surface which faces upwards in the height direction, wherein the abutment surface for the adjustment screw is arranged to face upward in the height direction. For example, the bottom support surface has a main plane, which is normal to the height direction. In many applications it is desirable that the plane of the bottom support surface is parallel with diameter direction of the main axis. Preferably, in an unadjusted start position of the tool unit, the bottom surface and the cutting insert are such designed and located that a cutting edge in an active cutting position is on the main axis.

Preferably, the abutment surface for the adjustment screw protrudes axially outward relative the main contact surface of the support interface connects to both support guide surfaces of the pair. According to a preferred embodiment, the abutment surface forms a top surface of a protruding rectangular block also comprising the pair of support guide surfaces.

The locking mechanism for releasably securing the tool unit to the support unit by forcing the interfaces together preferably comprises a locking screw. According to an embodiment, the locking screw extends with a shaft through an unthreaded through hole in the tool unit and is in threaded engagement with the support unit. Preferably there is a play between the internal walls of the unthreaded through hole and the shaft of the locking screw. When it is desired to adjust the tool unit in the height direction, the locking screw is loosened only sufficiently to allow the tool unit to be moved in the height direction by the tool guide surfaces sliding against the support guide surfaces. Thereby advantageously, the locking screw does not need to be unscrewed and pulled out of the tool unit entirely. Alternatively, the locking mechanism comprises a clamp.

In a preferred embodiment with a protruding rectangular block in the support interface, the block is proved with a threaded hole for engagement with the threads of the locking screw.

According to an embodiment, the locking screw has a threading axis, wherein, as seen in a plane that is normal to the height direction, the threading axis intersects and, in a direction axially inward of the main axis, diverges from the main axis by an angle of 6° - 10° toward the axis of rotation. Thanks to this arrangement, the locking screw urges the tool unit towards the support unit such that cutting forces during operation are less likely to disrupt the tool unit.

### Brief description of the drawings

In the following, example embodiments will be described in greater detail and with reference to the accompanying drawings, in which:
Fig. 1 is a perspective view of an embodiment of a boring head according to the present invention when it is mounted to a rotatable spindle;
Fig. 2 is an exploded view of the boring head according to the embodiment;
Fig. 3 is an exploded view of a piston and a tool unit of the boring head according to the embodiment;
Fig. 4 is a sectional view of the boring head according to the embodiment as indicated by lines IV-IV in Fig. 5;
Fig. 5 is a side view perpendicular to both a main axis in a diameter direction and an axis in a height direction of the boring head according to the embodiment;
Fig. 5a is a diagram showing a cutting insert with a cutting edge in a position where the height has been adjusted as compared to the position in Fig. 5.
Fig. 6 is a side view along the main axis in the diameter direction of the boring head according to the embodiment;
Fig. 7 is a sectional view of the boring head according to the embodiment as indicated by lines VII-VII in Fig. 6.

All the figures are schematic, not necessarily to scale, and generally only show parts which are necessary in order to elucidate the respective embodiments, whereas other parts may be omitted or merely suggested. Unless otherwise indicated, like reference numerals refer to like parts in different figures.

### Detailed description

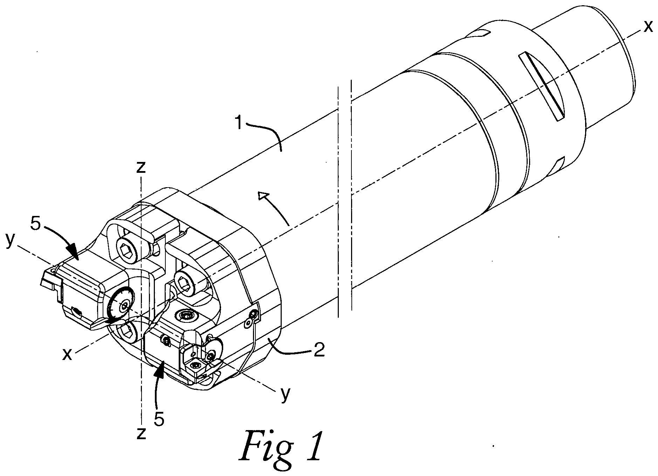

Fig. 1 shows two identical boring heads 5 according to a first embodiment of the present invention, which both are attached to a bridge 2. The boring heads 5 are, via the bridge 2, mounted to a rotatable shaft 1. The shaft 1 extends along an axis of rotation x, which defines a reference direction x in each boring head 5. The shaft 1 is mountable to a spindle of a CNC machine by means of a machine interface in form of a Capto coupling. As seen along the axis of rotation x, the machine interface is arranged in an end opposite to the boring heads 5. Thus, each boring head 5 is designed and configured rotatable around the axis of rotation x of the shaft 1. The boring heads 5 are intended for chip removing machining of a workpiece upon rotation around the axis of rotation x, and specifically for enlarging a diameter of a preproduced hole.

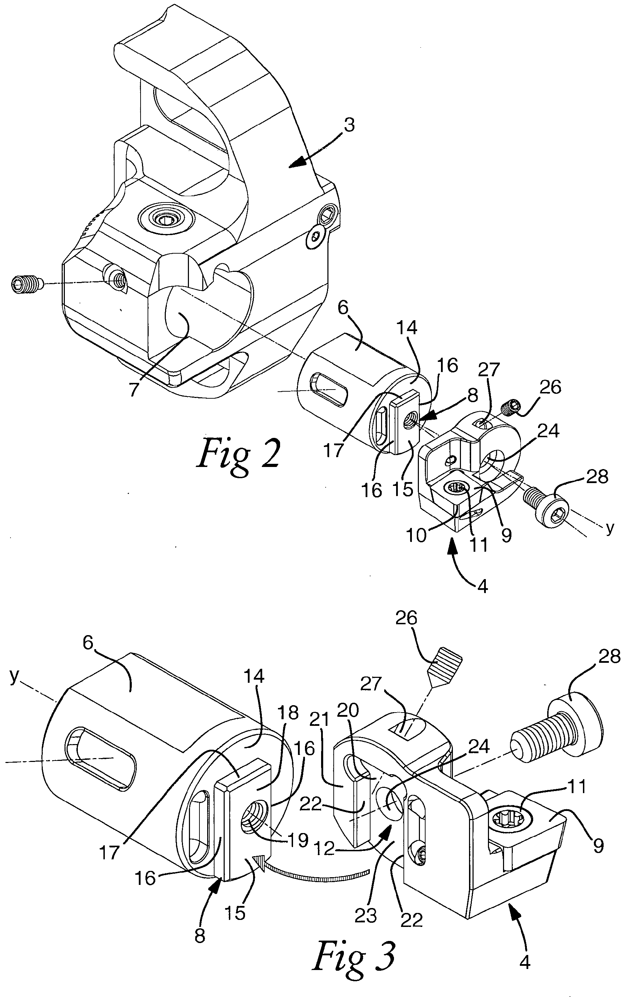

Enlarged views of one of the boring heads 5 according to the embodiment of the present invention are shown in Figs. 2 - 7. The boring head 5 has a main axis in a diameter direction (y), and an extension in a height direction (z), which height direction (z) is perpendicular to the main axis. Both the diameter direction (y) and the height direction (z) are perpendicular to the axis of rotation (x). During operation, the diameter direction (y) is the direction for setting the desired diameter to be machined in the preproduced hole of the workpiece. A direction axially outward along the main axis in the diameter direction increases the diameter. A corresponding direction axially inward decreases the diameter.

The boring head 5 comprises a support unit 3 and a tool unit 4.

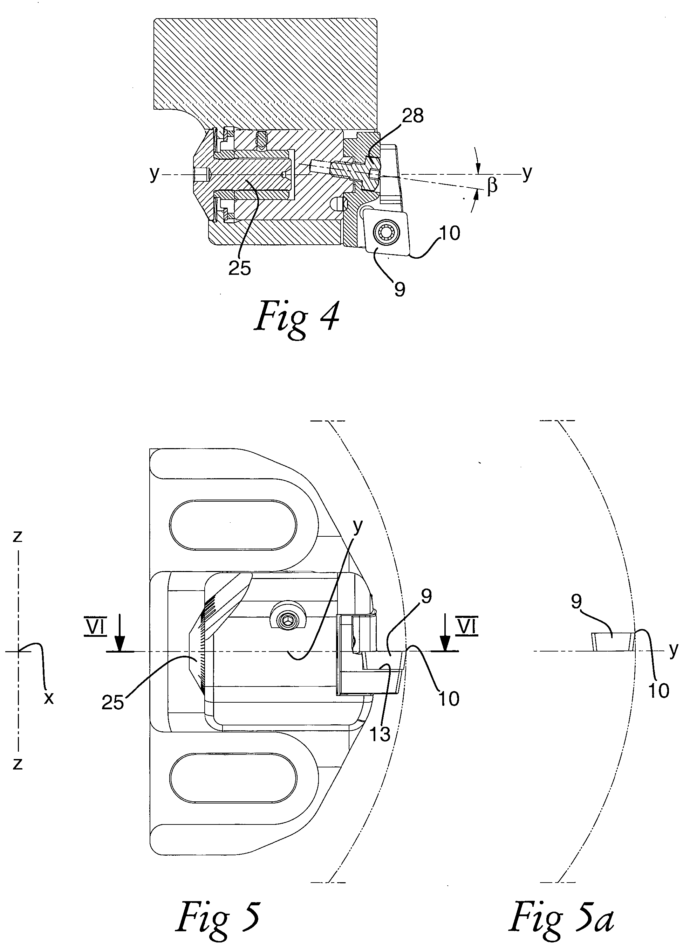

The support unit 3 comprises a piston 6 which is movably arranged in the boring head 5 in the diameter direction along the main axis. In the shown example embodiment, the support unit 3 comprises a guiding cavity 7 arranged in a housing of the boring head 5, in which guiding cavity 7 the piston 6 is received. The piston 6 extends along the main axis from an axially outer end to an axially inner end. The boring head 5 comprises a micrometer screw 25, which is in engagement the piston 6 and operable to move the piston 6 along the main axis, c.f. Figs. 4 and 5.

The piston 6 has a support interface 8 at the axially outer end. The support interface 8 comprises a main contact surface 14, which is planar, faces axially outward and is normal to the main axis. A rectangular block 15 protrudes axially outward from the main contact surface 14. A pair of support guide surfaces 16 form one respective side surface of the block 15 and an abutment surface 17 connects to both support guide surfaces forming, as seen in the height direction, a top surface of the block 15. The pair of support guide surfaces 16 and the abutment surface 17 are interconnected by an outward facing surface 18 of the block 15. A threaded hole 19 is arranged in the surface 18 of the block 15.

The tool unit 4 extends along the main axis from an axially outer end to an axially inner end. The tool unit is in from of a holder and is configured for receiving a cutting insert 9 by having an insert seat at the axially outer end. The insert seat comprises a bottom surface 13 having a main plane, which is normal to the height direction, c.f. Fig. 5. The direction in which the bottom surface 13 faces is defined as upward in the height direction (z). The plane of the bottom support surface 13 is parallel with the diameter direction (y) of the main axis.

The tool unit 4 further comprises the cutting insert 9 in form of an indexable cutting insert. The cutting insert 9 is received in the insert seat, wherein a cutting edge 10 is in an active cutting position. The cutting insert 9 is securely mounted in the insert seat by a fastening screw 11. The cutting edge 10 is located in the axially most outward position of the boring head 5.

The tool unit 4 comprises a tool interface 12 at the axially inner end thereof, c.f. Fig. 3. The tool interface 12 comprises a main contact surface 21 which is planar, faces axially inward and is normal to the main axis. The main contact surface 21 of the tool interface 12 contacts the main contact surface 14 of the support interface 8. A rectangular recess 20 extends into the main contact surface 21 of the tool interface 12. A pair of tool guide surfaces 22 form one respective side surface of the recess 20. The recess 20 has bottom surface 23, which connects to both the tool guide surfaces 22. A through, unthreaded hole 24 extends through the tool unit 4, which hole 24 has an opening in the bottom surface 23 of the tool interface 12. Another through, threaded hole 27 extends through the tool unit 4 from an opening in an external surface of the tool unit 4 to an opening in a top surface of the recess 20.

The two pair of guide surfaces 16, 22 extend in the height direction (z), wherein the tool guide surfaces 22 face toward the center of the boring head 5 from one respective side thereof, while each of the support guide surfaces 16 face away from the center from one respective side thereof. When the tool unit 4 is secured to the support unit and the interfaces 8, 12 are forced together, there is a gap between the bottom surface 23 of the recess 20 and the surface 18 of the block 15.

The boring head 5 comprises a height adjustment mechanism in form of a height adjustment screw 26, which is operable to move the tool unit 4 relative the support unit 3 in the height direction (z). The height adjustment screw 26 has front end and a rear end, and a head at the rear end.

The height adjustment screw 26 is threaded in the hole 27 in the tool unit 4 and abuts with the front end against the abutments surface 17 of the block 15 in the support interface 8. The head of the adjustment screw 26 is designed to cooperate with a tool for turning the screw in form of an Allen key. The head is directly accessible from outside the tool unit 4.

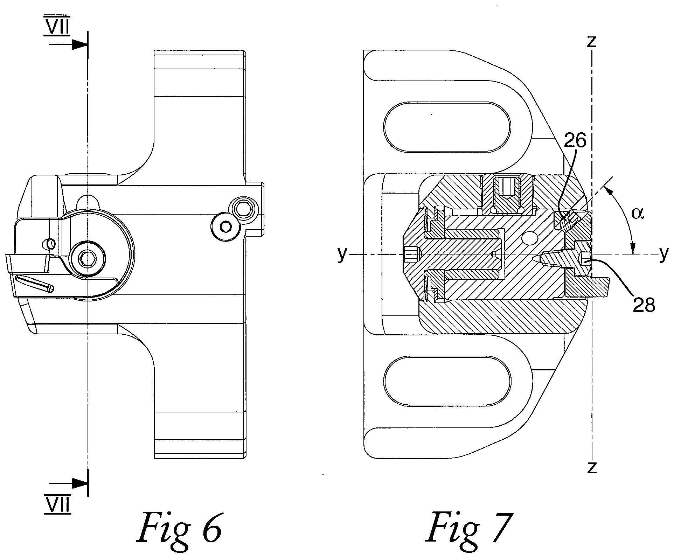

The threaded hole 27 and the height adjustment screw 26 extends at an angle α of 45° to the diameter direction (y), c.f. Fig. 7.

Finally, the boring head comprises a locking mechanism for releasably securing the tool unit 4 to the support unit 3 by forcing the interfaces 8, 12 together. The locking mechanism in the example embodiment a locking screw 28. The locking screw 28 has a shaft which extends through the unthreaded, through hole 24 in the tool unit 4 and is in threaded engagement in the threaded hole 19 through the block 15 of the support interface 8. The unthreaded through hole 24, the threaded hole 19 and the shaft of the locking screw are aligned and, in a direction axially inward of the main axis, diverges from the main axis at an angle β of 8°. When the boring head is attached to a spindle, the locking screw diverges from the main axis toward the axis of rotation (x). The head of the locking screw 28 abut against the tool unit 4 such that when the locking screw is tightened, the two interfaces 8, 12 are forced together and the tool unit 4 and the support unit 3 are releasably secured together. There is a play between the internal walls of the unthreaded through hole 24 and the shaft of the locking screw 28.

When, it is desired to adjust the height of the cutting edge 10 of the cutting insert 9, an operator releases the tool unit 4 from the support unit 3 by loosening the locking screw 28. The locking screw 28 is still in threaded engagement with the threaded hole 19 in the support unit such that the tool unit 4 and the support unit 3 still are loosely attached. Then the operator turns the height adjustment screw 26, whereby it advances in the hole 27 in the tool unit 4 and pushes with the front end against the abutment surface 17 of the support interface 8. This causes the support unit 4 with the cutting insert to move upwards in the height direction (z) relative the support unit 3. Therein, the tool guide surfaces 22 slide against a respective one of the support guide surfaces 16 such that the tool unit is carefully guided. Due to the play between the internal walls of the unthreaded through hole 24 and the shaft of the locking screw 28, the sliding movement is not blocked. When the cutting edge 10 has reached the desired height position as shown in Fig. 5a, the operator again tightens the locking screw 28. Thanks to the angle β it is ensured that two of the cooperating guide surfaces 16, 22, which are closest to cutting insert 9, are pressed into contact.

## Claims

1. A boring head for metal cutting has a main axis in a diameter direction (y), and an extension in a height direction (z), which height direction (z) is perpendicular to the main axis, and comprises
- a support unit (3),
- a tool unit (4), and
- a locking mechanism,
wherein
- the support unit (3) extends axially inward along the main axis from an axially outer end, and comprises a support interface (8) at the outer end,
- the tool unit (4) extends axially outward along the main axis from an axially inner end, and comprises a tool interface (12) at the inner end, and
- the tool unit (4) is releasably secured to the support unit (3) by the locking mechanisms forcing the tool interface (12) against the support interface (8),
**characterized in that**
- the support interface (8) comprises a pair of support guide surfaces (16), which extend in the height direction (z) and face in opposite directions, and
- the tool interface (12) comprises a pair of tool guide surfaces (22), which extend in the height direction (z) and face in opposite directions toward a respective one of the support guide surfaces (16), wherein the tool unit (4) is movably arranged in the height direction (z) by the tool guide surfaces (22) sliding against a respective one of the support guide surfaces (16).

2. The boring head according to claim 2, wherein the boring head is designed and configured rotatable around an axis of rotation, which defines a reference direction (x) in the boring head, wherein the height direction (z) is perpendicular to both the reference direction (x) and the diameter direction (y) of the main axis.

3. The boring head according to any preceding claim, wherein the support unit (3) comprises a piston (6), which extends along the main axis and is movably arranged in the boring head along the main axis, wherein the axially outer end of the piston (6) is the axially outer end of the support unit (3) and comprises the support interface (8).

4. The boring head according to any preceding claim, wherein
- the support interface (8) comprises a main contact surface (14), which faces axially outward, and
- the tool interface (12) comprises a main contact surface (21), which faces axially inward and contacts the main contact surface (14) of the support interface (8).

5. The boring head according to any preceding claim, wherein
- the pair of support guide surfaces (16) protrude axially outward relative the main contact surface (14) of the support interface (8), and
- the pair of tool guide surfaces (22) are recessed axially inward relative the main contact surface (21) of the tool interface (12).

6. The boring head according to any preceding claim, further comprising a height adjustment screw (26), which is in engagement with the support unit (3) and the tool unit (4), and which, when the tool unit (4) is released by the locking mechanism, is operable to move the tool unit (4) in the height direction (z) relative the support unit (3).

7. The boring head according to claim 6, wherein, as seen perpendicular to both the diameter direction (y) and the height direction (z), the height adjustment screw (26) extends at an angle α of 30° - 60° to the diameter direction (y).

8. The boring head according to claim 6 or 7, wherein
- the height adjustment screw (26) has front end and a rear end, and a head at the rear end, and
- the height adjustment screw (26) is in threading engagement with the tool unit (4) and abuts against an abutment surface (17) of the support interface (8) with the front end.

9. The boring head according to any claim 6 - 8, wherein the abutment surface (17) protrudes axially outward relative the main contact surface (14) of the support interface (8) and connects to both support guide surfaces (16) of the pair.

10. The boring head according to any preceding claim, wherein the tool unit (4), at the axially outer end thereof, comprises an insert seat for receiving a cutting insert (9).

11. The boring head according to claims 9 and 10, wherein the insert seat comprises a bottom support surface (13) which faces upwards in the height direction (z), wherein the abutment surface (13) is arranged to face upward in the height direction.

12. The boring head according to any preceding claim, wherein the tool unit (4) at the axially outer end thereof, comprises a cutting edge.

13. The boring head according to any preceding claim, wherein the locking mechanism comprises a locking screw (28).

14. The boring head according to claim 13, wherein the locking screw (28) extends through the tool unit (4) and is in threaded engagement with the support unit (3).

15. The boring head according to claims 2 and 14, wherein the locking screw (28) has a threading axis, wherein as seen in a plane that is normal to the height direction (z), the threading axis intersects and, in a direction axially inward of the main axis, diverges from the main axis by an angle β of 6° - 10° toward the axis of rotation.
